# EUROPÄISCHE PATENTANMELDUNG

(11) **EP 1 424 621 A1**
(43) Veröffentlichungstag der Anmeldung: **02.06.2004**
(21) Anmeldenummer: 02026482.6
(22) Anmeldetag: 27.11.2002
(51) Int. Cl.: G06F 1/18, G11B 33/12

(54) **Computergehäuse mit von hinten ausziebarem Trägerrahmen für Festplatte**

(71) Anmelder: Lee, Kevin, Pa-The City, Tao-Yuan Hsien (TW)
(72) Erfinder: Lee, Kevin, Pa-The City, Tao-Yuan Hsien (TW)
(74) Vertreter: VOSSIUS & PARTNER

(57) **Zusammenfassung**

Die Erfindung betrifft ein Computergehäuse mit von hinten ausziehbarem Trägerrahmen für Festplatte, das ein Computergehäuse, das in der Rückseite eine Öffnung aufweist, neben der jeweils ein Schraubenloch und an deren beiden Innenwänden jeweils eine horizontale Führungsnut vorgesehen ist, und einen Trägerrahmen für Festplatte, die zumindest eine Festplatte aufnimmt und eine äußere Seitenplatte, die die Öffnung abdichten kann und beiderseitig jeweils mit einer gefederten Schraube versehen ist, die in das Schraubenloch neben der Öffnung gedreht werden kann, wodurch der Trägerrahmen an der hinteren Seite des Computergehäuses verschraubt ist, und eine horizontale Platte aufweist, die zwei vorstehende Ränder besitzt, die in die Führungsnuten in der Öffnung gleiten können, aufweist.

## Beschreibung

Die Erfindung betrifft ein Computergehäuse mit von hinten ausziehbarem Trägerrahmen für Festplatte, durch den der Wechsel und die Reparatur der Festplatte erheblich erleichtert werden.

Beim Einbau der Festplatte wird das herkömmliche Computergehäuse auseinandergebaut. Anschließend wird die Festplatte mittels Schrauben an der vorbestimmten Stelle im Computergehäuse befestigt. Schließlich wird das Computergehäuse wieder zusammengebaut.

Der Erfindung liegt die Aufgabe zugrunde, ein Computergehäuse mit von hinten ausziehbarem Trägerrahmen für Festplatte zu schaffen, durch den der Wechsel und die Reparatur der Festplatte erfolgen können, ohne das Computergehäuse auseinanderzubauen.

Der Erfindung liegt eine weitere Aufgabe zugrunde, ein Computergehäuse mit von hinten ausziehbarem Trägerrahmen für Festplatte zu schaffen, der in zwei Führungsnuten des Computergehäuses gleiten kann, so daß die Herstellungskosten nicht erhöht werden.

Diese Aufgaben werden mit den Merkmalen der Patentansprüche gelöst.
- Figur 1: zeigt eine perspektivische Darstellung der Erfindung.
- Figur 2: zeigt eine Explosionsdarstellung der Erfindung.
- Figur 3: zeigt eine perspektivische Darstellung der Erfindung teilweise im Schnitt.

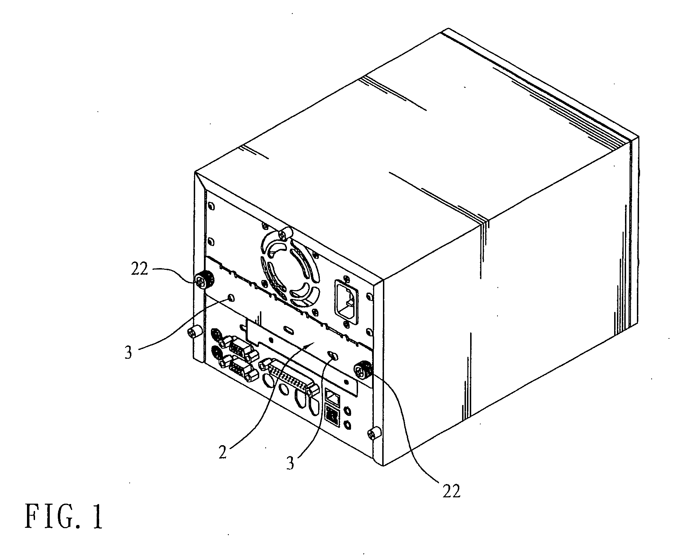

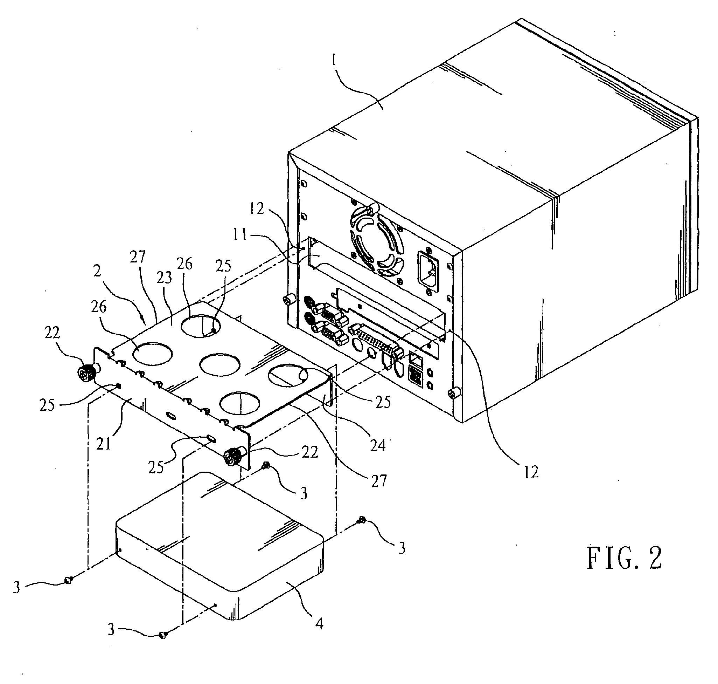

Bezugnehmend auf Figur 1 und 2 weist das Computergehäuse 1 in der Rückseite eine Öffnung 11 für einen Trägerrahmen 2 der Festplatte auf, neben der jeweils ein Schraubenloch 12 vorgesehen ist, um den Trägerrahmen 2 zu befestigen.

Der Trägerrahmen 2 weist eine äußere Seitenplatte 21 auf, die beiderseitig jeweils mit einer gefederten Schraube 22 versehen ist, die in das Schraubenloch neben der Öffnung 11 gedreht werden kann, wodurch der Trägerrahmen 2 an der hinteren Seite des Computergehäuses 1 verschraubt ist.

Der Trägerrahmen 2 weist weiterhin eine horizontale Platte 23 und eine innere Seitenplatte 24 auf. Die Schrauben 3 können durch die Löcher 25 der äußeren Seitenplatte 21 oder der inneren Seitenplatte 24 in die Festplatte 4 gedreht werden, wodurch die Festplatte unter der horizontalen Platte 23 befestigt ist.

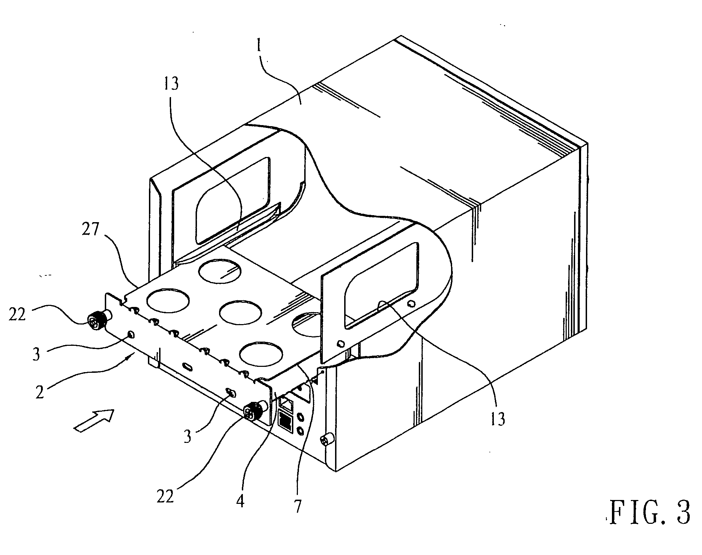

Die horizontale Platte 23 besitzt eine Vielzahl von Öffnungen 26 zur Wärmeableitung und bildet beiderseitig jeweils einen vorstehenden Rand 27, der in die Führungsnut 13 des Computergehäuses 1 gleiten kann, die horizontal an der Innenwand der Öffnung 11 vorgesehen ist, wie in Figur 3 dargestellt ist.

Da die gefederten Schrauben 22 an den beiden Seiten der äußeren Seitenplatte 21 des Trägerrahmens 2 befestigt sind, muß der Benutzer nur die gefederten Schrauben 22 aus den Schraubenlöchern 12 lösen und den Trägerrahmen 2 aus dem Computergehäuse 1 ausziehen, wenn die Festplatte ausgewechselt oder repariert werden soll.

Die neue oder reparierte Festplatte 4 kann unter der horizontalen Platte 23 des Trägerrahmens 2 mittels der Schrauben 3, die durch die Löcher 25 der äußeren Seitenplatte 21 oder der inneren Seitenplatte 24 in die Festplatte 4 gedreht werden, im Trägerrahmen 2 befestigt werden. Daraufhin wird die Festplatte 4 mit dem Computergehäuse 1 elektrisch verbunden (nicht dargestellt). Anschließend werden die Ränder 27 auf die Führungsnuten 13 in der Öffnung 11 ausgerichtet und in diese geschoben. Schließlich werden die gefederten Schrauben 22 in die Schraubenlöcher 12 neben der Öffnung 11 gedreht. Dadurch wird die Festplatte wieder im Computergehäuse eingebaut.

Daher kann die Festplatte leicht aus dem Computergehäuse entnommen werden, ohne das Computergehäuse auseinanderzubauen.

## Patentansprüche

1. Computergehäuse mit von hinten ausziehbarem Trägerrahmen für Festplatte, das
ein Computergehäuse (1), das in der Rückseite eine Öffnung (11) aufweist, neben der jeweils ein Schraubenloch (12) und an deren beiden Innenwänden jeweils eine horizontale Führungsnut (13) vorgesehen ist, und
einen Trägerrahmen (2) für Festplatte, die zumindest eine Festplatte aufnimmt und eine äußere Seitenplatte (21), die die Öffnung (11) abdichten kann und beiderseitig jeweils mit einer gefederten Schraube (22) versehen ist, die in das Schraubenloch (12) neben der Öffnung (11) gedreht werden kann, wodurch der Trägerrahmen (2) an der hinteren Seite des Computergehäuses (1) verschraubt ist, und eine horizontale Platte (23) aufweist, die zwei vorstehende Ränder (27) besitzt, die in die Führungsnuten (13) in der Öffnung (11) gleiten können,
aufweist.

2. Computergehäuse nach Anspruch 1, **dadurch gekennzeichnet, daß** der Trägerrahmen (2) eine äußere Seitenplatte (21), eine horizontale Platte (23) und eine innere Seitenplatte (24) aufweist, wobei die äußere Seitenplatte (21) und die innere Seitenplatte (24) mit Löchern (25) versehen sind, durch die die Schrauben (3) hindurchgehen können, die dann in die Festplatte (4) gedreht werden, wodurch die Festplatte (4) im Trägerrahmen (2) befestigt ist.

3. Computergehäuse nach Anspruch 1 oder 2, **dadurch gekennzeichnet, daß** die horizontale Platte (23) eine Vielzahl von Öffnungen (26) zur Wärmeableitung besitzt.
